# DEMANDE DE BREVET EUROPEEN

(11) **EP 0 891 027 A1**
(43) Date de publication de la demande: **13.01.1999**
(21) Numéro de dépôt: 98410077.6
(22) Date de dépôt: 06.07.1998
(51) Int. Cl.: H02B 1/38, E05D 15/50

(54) **Armoire électrique à inversion du sens d'ouverture de la porte pivotante**

(30) Priorité: 10.07.1997 FR 9709041
(71) Demandeur: SCHNEIDER ELECTRIC SA, 92100 Boulogne Billancourt (FR)
(72) Inventeur: Pin, Jean-Pierre, 38050 Grenoble cedex 09 (FR); Laboch, Kasimir, 38050 Grenoble cedex 09 (FR)
(74) Mandataire: Ritzenthaler, Jacques

(57) **Abrégé**

Une armoire électrique comporte une porte 10 montée à pivotement sur la face antérieure de l'ossature. La porte comprend un cadre rectangulaire équipé de deux montants 14, 16 parallèles en forme de profilés s'étendant selon la direction verticale, et un dispositif de fermeture 54 ayant une poignée 52 à serrure et deux tringles de commande 50 à mouvements opposés coopérant avec des organes de retenue 46 solidaires de l'ossature. Les deux montants 14, 16 de la porte 10 comportent:
- deux orifices 24, 26 situés dans le plan médian horizontal pour l'introduction au choix de la serrure 52 selon le sens d'ouverture de la porte 10,
- et quatre éléments de maintien 28, 30, 32, 34 de structures identiques agencés le long des deux côtés latéraux de la porte 10 pour servir alternativement d'organes de pivotement ou de pions de fermeture selon que la serrure 52 est engagée respectivement dans l'orifice de droite 26 ou l'orifice de gauche 24, chaque élément de maintien 28, 30, 32, 34 étant pourvu d'un plot 36 cylindrique télescopique déplaçable à l'intérieur de l'organe de retenue 46 correspondant entre une première position préliminaire d'encliquetage ou de pivotement, et une deuxième position finale de verrouillage ou de pivotement.

## Description

L'invention est relative à une armoire électrique ayant une ossature métallique, et une porte montée à pivotement sur la face antérieure de ladite ossature, et comprenant :
- un cadre rectangulaire équipé de deux montants parallèles en forme de profilés s'étendant selon la direction verticale,
- et un dispositif de fermeture ayant une poignée à serrure et deux tringles de commande à mouvements opposés coopérant avec des organes de retenue solidaires de l'ossature.

Dans les armoires connues du genre mentionné, la réversibilité de la porte pour l'ouverture à gauche ou à droite nécessite généralement le perçage de deux lumières rectangulaires disposées symétriquement par rapport au plan médian horizontal pour le logement de la poignée associée aux tringles de commande. La poignée est introduite dans l'une des lumières de la porte pour l'ouverture dans un sens donné, et est engagée dans l'autre lumière pour le sens opposé, et après retournement de la porte de 180°. Les pions de fermeture sont solidaires des tringles, et coopèrent avec des butées fixées le long des montants de l'ossature. La structure des charnières pour le pivotement de la porte est totalement différente de celle des pions de fermeture. Il est nécessaire de démonter les charnières lors de l'opération d'inversion du sens d'ouverture de la porte, pour les fixer sur le côté opposé.

L'objet de l'invention consiste à réaliser une armoire électrique utilisant les mêmes éléments pour réaliser les fonctions de pivotement et de fermeture.

L'armoire selon l'invention est caractérisée en ce que deux montants de la porte comportent:
- deux orifices situés dans le plan médian horizontal pour l'introduction au choix de la serrure selon le sens d'ouverture de la porte,
- et quatre éléments de maintien de structures identiques agencés le long des deux côtés latéraux de la porte pour servir alternativement d'organes de pivotement ou de pions de fermeture selon que la serrure est engagée respectivement dans l'orifice de droite ou l'orifice de gauche, chaque élément de maintien étant pourvu d'un plot cylindrique télescopique déplaçable à l'intérieur de l'organe de retenue correspondant entre une première position préliminaire d'encliquetage ou de pivotement, et une deuxième position finale de verrouillage ou de pivotement.

Selon un mode de réalisation préférentiel, le plot de chaque élément de maintien comporte une rampe permettant une fermeture par claquage, et un embout de positionnement ajustable entre les première et deuxième positions, soit par l'action des tringles de commande dans la première fonction de pion de fermeture, soit par la mise en place d'une vis de blocage à l'intérieur d'une encoche prédéterminée dudit embout dans la deuxième fonction d'organe de pivotement.

Les quatre éléments de maintien de la porte sont identiques, ainsi que les quatre organes de retenue fixés à l'ossature. L'inversion du sens d'ouverture de la porte ne nécessite aucun démontage des éléments de maintien. Il suffit simplement d'ajuster le positionnement relatif des plots télescopiques.

Selon une caractéristique de l'invention, le plot est doté d'un trou borgne dans lequel s'engage la partie supérieure de l'embout de positionnement avec interposition d'un ressort de compression.

La surface latérale du plot est percée par un trou pour le passage d'un doigt d'arrêt vissé dans l'embout de positionnement de manière à limiter la course du déplacement dudit plot.

Selon une autre caractéristique de l'invention, l'ensemble plot et embout de positionnement est logé dans une douille de réception enfichée à l'extrémité du profilé du montant correspondant, ladite douille étant équipée d'une lumière oblongue pour le déplacement du doigt d'arrêt, et d'un orifice de passage du plot télescopique.

La douille de réception comporte un autre trou pour l'introduction de la vis de blocage dans l'une des deux encoches de l'embout de positionnement dans le cas de la deuxième fonction de pivotement.

D'autres avantages et caractéristiques ressortiront plus clairement de la description qui va suivre d'un mode de réalisation de l'invention, donné à titre d'exemple non limitatif et représenté aux dessins annexés dans lesquels :
- les figures 1 à 4 montrent des vues schématiques de la porte au cours d'une opération d'inversion du sens d'ouverture ;
- la figure 5 est une vue éclatée en perspective de la porte ;
- la figure 6 représente une vue éclatée en perspective d'un élément de maintien prêt à être introduit dans le profilé d'un montant de la porte ;
- la figure 7 montre l'élément de maintien partiellement en coupe, après fermeture de la porte en engagement sur l'ossature ;
- les figures 8 à 10 sont des vues en coupe selon la ligne 8-8 de la figure 7, montrant la première fonction de fermeture d'un élément de maintien au cours d'une fermeture de la porte par claquage ;
- les figures 11 et 12 sont des vues identiques de la figure 8, respectivement lors de la condamnation, et de l'ouverture de la porte par l'actionnement de la poignée ;
- les figures 13 et 14 sont des vues identiques de la figure 8, représentant la deuxième fonction de pivotement de l'élément de maintien, respectivement dans une première position préliminaire, et une deuxième position finale de pivotement ;
- les figures 15 et 16 sont des vues en perspective identiques de la figure 7, sans coupe, et respectivement en position d'ouverture et en position de fermeture de la porte.

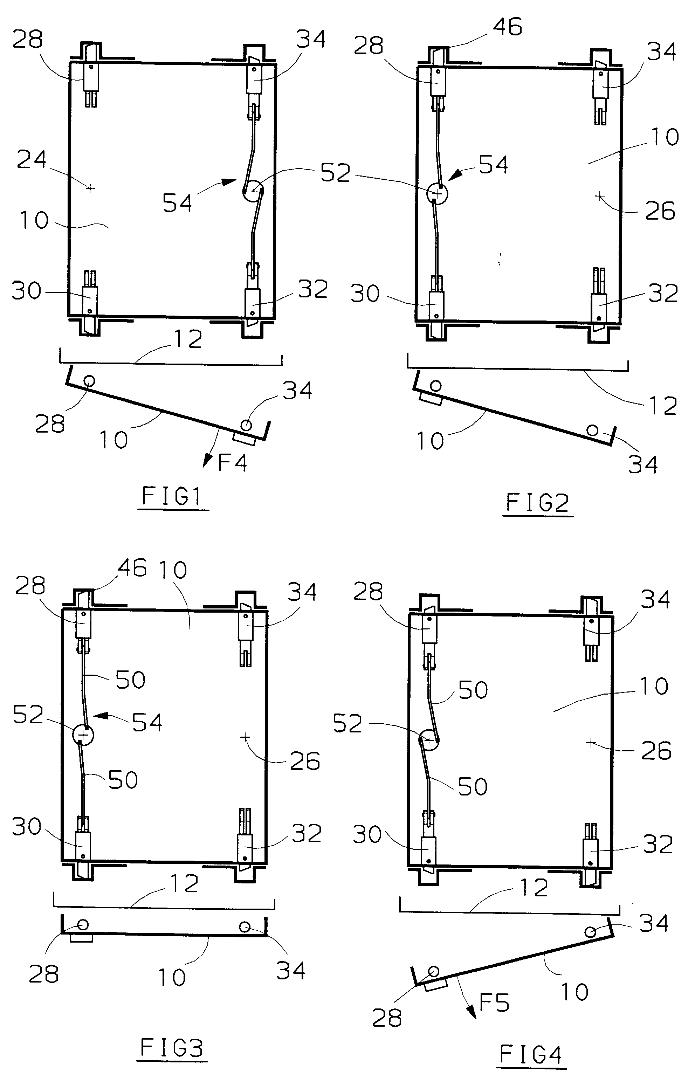

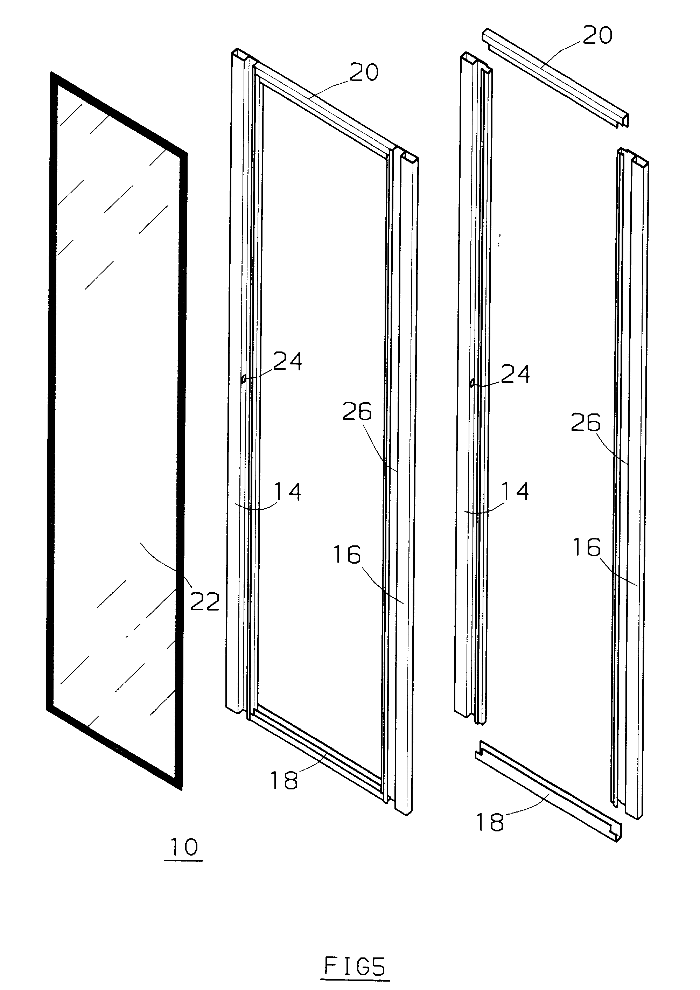

En référence aux figures 1 à 7, une porte 10 est montée à pivotement sur la face antérieure d'une ossature 12A, 12B, 12C pour une armoire électrique. La porte 10 est formée par l'assemblage de deux montants 14, 16, et de deux traverses 18,20 constituant un cadre rectangulaire à l'intérieur duquel est intégrée une plaque 22 réalisée notamment en matériau plastique translucide. Les deux montants 14, 16 verticaux de la porte 10 comportent deux profilés creux parallèles ayant deux orifices 24, 26 identiques situés dans le plan médian horizontal, et des éléments de maintien 28, 30, 32, 34 disposés aux quatre coins de la porte 10 en étant insérés dans les extrémités opposées de chaque montant 14, 16.

Les quatre éléments de maintien 28, 30, 32, 34 sont formés par quatre pièces identiques servant alternativement d'organes de pivotement ou de pions de fermeture, dont la fonction est interchangeable de chaque côté latéral en fonction du sens d'ouverture de la porte à gauche ou à droite.

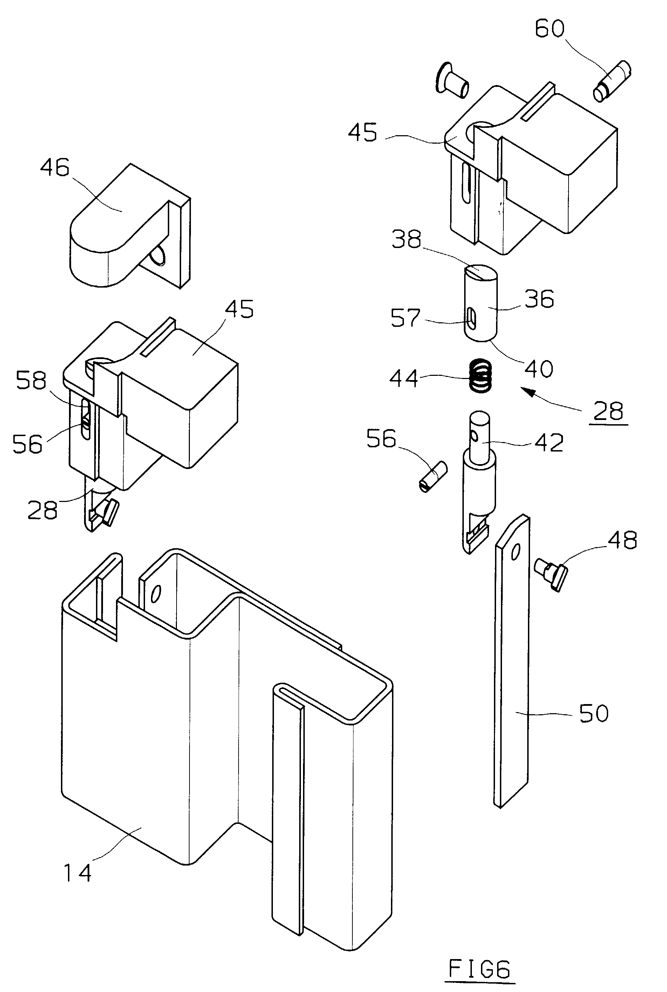

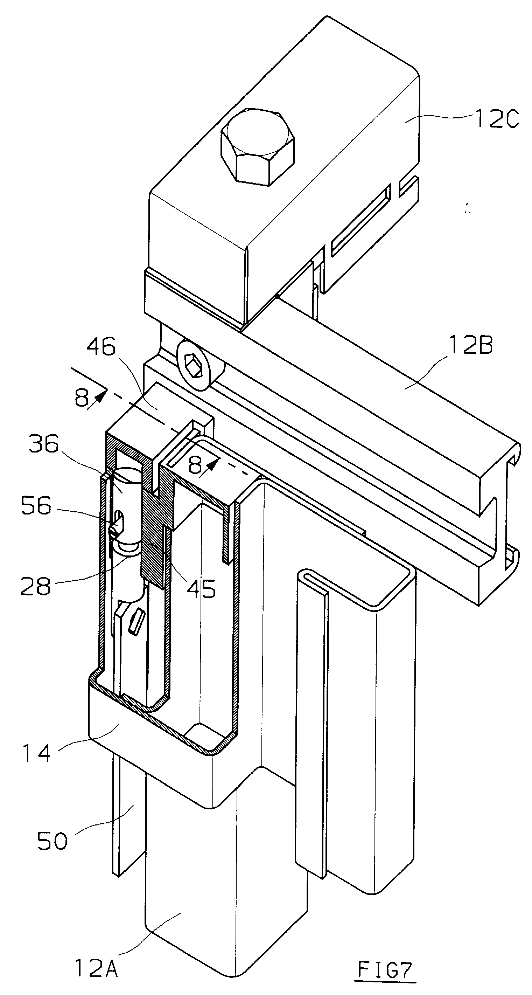

La structure d'un élément de maintien, par exemple 28 sur les figures 6 et 7, comporte un plot 36 cylindrique ayant une extrémité supérieure conformée selon une rampe 38, et un trou 40 borgne dans lequel s'engage un embout de positionnement 42 ajustable. Un ressort de compression 44 est intercalé entre le fond du trou 40, et l'embout de positionnement 42, l'ensemble étant logé dans une douille de réception 45 enfichée dans le profilé du montant 14 correspondant. Le plot 36 télescopique fait saillie de la douille 45, et coopère avec un évidemment 47 d'un organe de retenue 46 fixé à l'ossature 12. Dans le cas de l'utilisation en pion de fermeture, l'extrémité inférieure de l'embout de positionnement 42 peut être raccordée par une vis 48 à une tringle de commande 50 reliée à la poignée 52 du dispositif de fermeture 54.

La course de déplacement du plot 36 télescopique est limitée grâce à un doigt d'arrêt 56 vissé radialement à travers un trou 57 du plot 36 dans l'extrémité supérieure de l'embout de positionnement 42, et se déplaçant selon la direction verticale dans une lumière 58 oblongue de la douille 45 fixe.

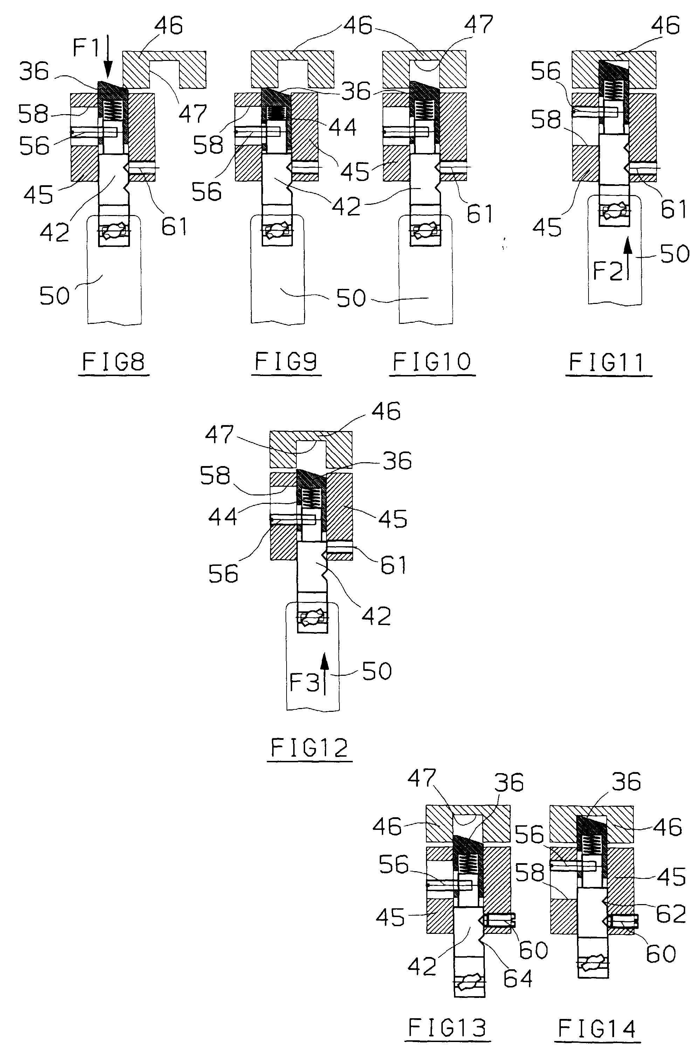

La fermeture de la porte 10 par claquage s'effectue de la manière illustrée aux figures 8 à 10:
Lorsque la rampe 38 du plot 36 arrive avant la fin de course de fermeture en contact avec l'organe de retenue 46, le plot 36 se rétracte automatiquement selon la flèche F1 en comprimant le ressort 44 de manière à permettre la poursuite du mouvement de fermeture. Dès que le plot 36 arrive en fin de course de fermeture (figure 10) en regard avec l'évidement 47 de l'organe de retenue 46, le plot 36 reprend sa position initiale grâce à la détente du ressort 44. Cette position du plot 36 correspond à une première position préliminaire d'encliquetage interdisant l'ouverture de la porte 10 en cas de tentative d'un mouvement de traction. Un jeu subsiste entre le plot 36 et le fond de l'évidement 47.

Sur la figure 11, le verrouillage définitif de la porte 10 intervient par l'actionnement de la poignée 52, provoquant le déplacement de la tringle 50 dans le sens de la flèche F2, en entraînant le plot 36 vers une deuxième position finale de verrouillage, en appui contre le fond de l'évidement 47.

Pour ouvrir la porte 10, il suffit d'actionner la poignée 52 en rotation inverse pour entraîner la tringle de commande 50 dans le sens du déverrouillage indiqué par la flèche F3 (figure 12). Le retrait du plot 36 à l'intérieur de l'orifice de la douille 45 autorise ensuite l'ouverture de la porte 10.

Les opérations de fermeture et d'ouverture de la porte montrées sur les figures 8 à 12, illustrent la première fonction de l'élément de maintien 28 comme pion de fermeture associé au dispositif de fermeture 54.

Les figures 13 et 14 représentent la deuxième fonction de l'élément de maintien 28 comme organe de pivotement ou charnière de la porte 10. Dans ce cas, la tringle de commande 50 est détachée de l'embout de positionnement 42, et le plot 36 peut être déplacé entre une première position préliminaire de pivotement (figure 13) et une deuxième position finale de pivotement (figure 14). Les deux positions de pivotement du plot 36 des figures 13 et 14 correspondent sensiblement aux positions d'encliquetage et de verrouillage du pion de fermeture des figures 10 et 11. Le choix des deux positions de pivotement s'effectue au moyen d'une vis de blocage 60 introduite à travers un trou 61 de la douille 45 dans l'une des deux encoches 62, 64 de l'embout de positionnement 42.

L'ajustage de l'embout de positionnement 42 des éléments de maintien 28, 30, 32, 34 intervient au cours d'une opération d'inversion du sens d'ouverture de la porte, indiquée sur les figures 1 à 4.

Sur la figure 1, le dispositif de fermeture 54 est situé à droite, la poignée 52 étant logée dans l'orifice 26 du montant 16 de la porte 10. Les deux éléments de maintien 32, 34 de droite servent de pions de fermeture, tandis que les deux autres éléments de maintien 28, 30 de gauche servent d'organes de pivotement en étant positionnés selon la figure 14. L'axe de pivotement de la porte 10 est formé dans ce cas par l'alignement des organes de maintien 28, 30.

Pour l'inversion du sens d'ouverture de la porte 10, il suffit d'ouvrir la porte 10 dans le sens F4 de la figure 1 pour effectuer le démontage des tringles de commande 50 et de la poignée 52 sur le côté droit. Les éléments de maintien 32, 34 sont positionnés dans la première position préliminaire de pivotement en vissant la vis de blocage 60 dans l'encoche supérieure 62 des embouts de positionnement 42 correspondants. La poignée 52 est engagée dans l'orifice 24 et les deux tringles de commande 50 du dispositif de fermeture 54 sont ensuite accouplées aux deux éléments de maintien 28, 30 du côté gauche après retrait des vis de blocage 60 correspondantes. La poignée à serrure 52 est ensuite actionnée vers la position de fermeture pour solliciter les éléments de maintien 28, 30 vers la deuxième position finale (figure 2).

La figure 3 montre la fermeture de la porte 10 après pivotement autour de l'axe vertical de gauche passant par les éléments de maintien 28, 30.

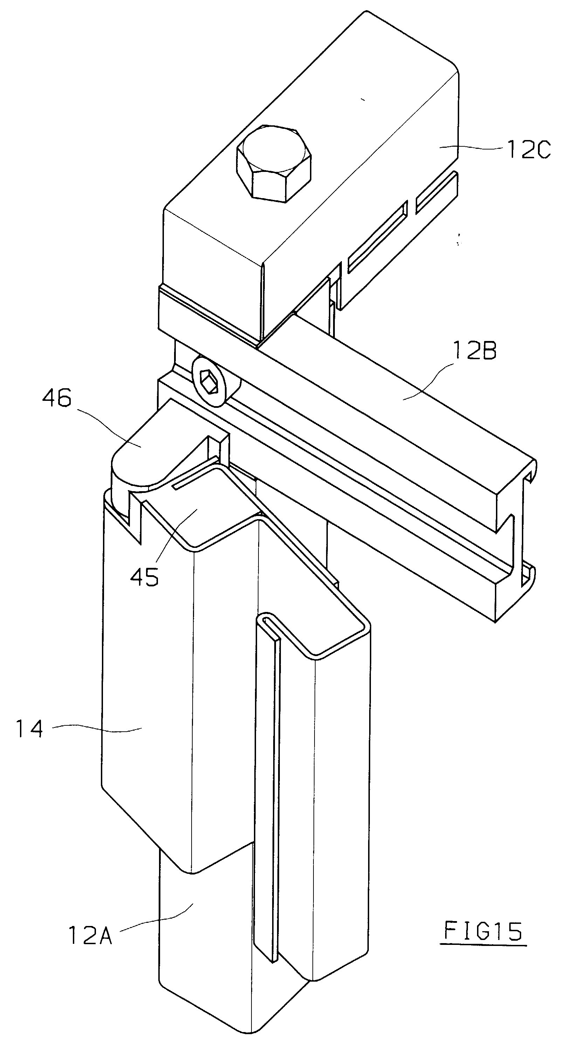

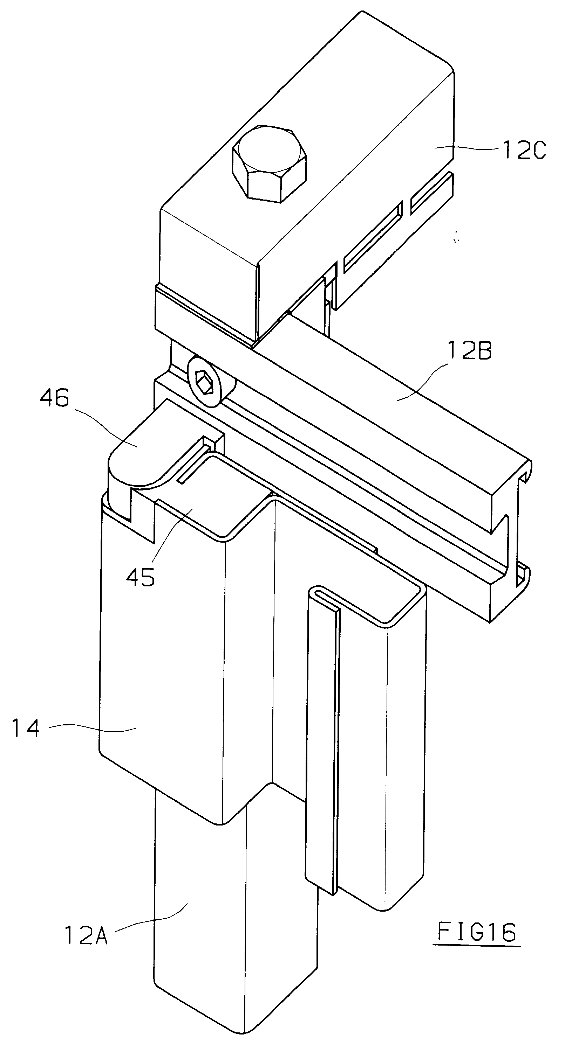

Il suffit ensuite d'ouvrir la porte 10 dans le sens de la flèche F5 (figure 4) après actionnement de la poignée 52 vers la position d'ouverture pour déplacer les éléments de maintien 28, 30 de gauche vers la position de la figure 12. Les éléments de maintien 32, 34 de droite sont actionnés vers la deuxième position finale de pivotement en vissant les deux vis de blocage 60 dans les encoches 64 correspondantes. Dans cette position, l'axe de pivotement de la porte est formé par l'alignement des éléments de maintien 32, 34 de droite, tandis que le dispositif de fermeture 54 est situé à gauche. L'inversion du sens d'ouverture est intervenu sans retourner la porte 10 de 180° grâce à la modification de fonction des quatre éléments de maintien 28, 30, 32, 34 tous solidaires de la porte 10. La figure 15 montre la porte 10 au moment de son ouverture selon le schéma de la figure 1. Sur la figure 16, la porte est fermée selon le schéma de la figure 3.

## Revendications

1. Armoire électrique ayant une ossature (12A, 12B, 12C) métallique, et une porte (10) montée à pivotement sur la face antérieure de ladite ossature, et comprenant :
- un cadre rectangulaire équipé de deux montants (14, 16) parallèles en forme de profilés s'étendant selon la direction verticale,
- et un dispositif de fermeture (54) ayant une poignée (52) à serrure et deux tringles de commande (50) à mouvements opposés coopérant avec des organes de retenue (46) solidaires de l'ossature,
caractérisée en ce que les deux montants (14, 16) de la porte (10) comportent:
- deux orifices (24, 26) situés dans le plan médian horizontal pour l'introduction au choix de la serrure (52) selon le sens d'ouverture de la porte (10),
- et quatre éléments de maintien (28, 30, 32, 34) de structures identiques agencés le long des deux côtés latéraux de la porte (10) pour servir alternativement d'organes de pivotement ou de pions de fermeture selon que la serrure (52) est engagée respectivement dans l'orifice de droite (26) ou l'orifice de gauche (24), chaque élément de maintien (28, 30, 32, 34) étant pourvu d'un plot 36 cylindrique télescopique déplaçable à l'intérieur de l'organe de retenue (46) correspondant, entre une première position préliminaire d'encliquetage ou de pivotement, et une deuxième position finale de verrouillage ou de pivotement, ledit plot (36) comportant une rampe (38) permettant une fermeture de la porte par claquage, et un embout de positionnement (42) ajustable entre les première et deuxième positions, soit par l'action des tringles de commande (50) dans la première fonction de pion de fermeture, soit par la mise en place d'une vis de blocage (60) à l'intérieur d'une encoche (62, 64) prédéterminée dudit embout dans la deuxième fonction d'organe de pivotement.

2. Armoire électrique selon la revendication 1, caractérisée en ce que le plot (36) est doté d'un trou (40) borgne dans lequel s'engage la partie supérieure de l'embout de positionnement (42) avec interposition d'un ressort de compression (44).

3. Armoire électrique selon la revendication 2, caractérisée en ce que la surface latérale du plot (36) est percée par un trou (57) pour le passage d'un doigt d'arrêt (56) vissé dans l'embout de positionnement (42) de manière à limiter la course du déplacement dudit plot.

4. Armoire électrique selon la revendication 3, caractérisée en ce que l'ensemble plot (36) et embout de positionnement (42) est logé dans une douille de réception (45) enfichée à l'extrémité du profilé du montant (14, 16) correspondant, ladite douille étant équipée d'une lumière (58) oblongue pour le déplacement du doigt d'arrêt (56), et d'un orifice de passage du plot (36) télescopique.

5. Armoire électrique selon la revendication 4, caractérisée en ce que la douille de réception (45) comporte un autre trou (61) pour l'introduction de la vis de blocage (60) dans l'une des deux encoches (62, 64) de l'embout de positionnement (42) dans le cas de la deuxième fonction de pivotement.

6. Armoire électrique selon la revendication 1, caractérisée en ce que l'extrémité de l'embout de positionnement (42) à l'opposé de la rampe (38) est apte à être attachée à une tringle de commande (50) au moyen d'une vis de fixation (48) dans le cas de la première fonction de pion de fermeture.
